# EUROPEAN PATENT APPLICATION

(11) **EP 1 473 576 A1**
(43) Date of publication of application: **03.11.2004**
(21) Application number: 03101222.2
(22) Date of filing: 02.05.2003
(51) Int. Cl.: G02B 6/136

(54) **Integrated optical waveguide**

(71) Applicant: ThreeFive Photonics B.V., 3994 DA Houten (NL)
(72) Inventor: Steenbergen, Cornelis, Adrianus, Marinus, 3723 RG, Bilthoven (NL)
(74) Representative: de Vries, Johannes Hendrik Fokke

(57) **Abstract**

The invention relates to an integrated optical device comprising a substrate (1) and at least one optical waveguide. The optical waveguide is at least substantially defined as a structure (4) of said substrate (1). The structure (4) may be stabilized by a support structure (12,12'). Such a structure is especially advantageous near an edge (13) of the device or substrate (1). The waveguide according to the invention can be advantageously applied in a spot size converter.

## Description

The invention relates to an integrated optical device comprising a substrate with at least one waveguide.

For integrated optical devices a key issue is the coupling of waveguides of these devices with optical fibres. It is crucial that such a coupling exhibits low optical loss and has a high alignment tolerance.

US 5,703,989 discloses an optical waveguide for use in an optoelectronic integrated circuit formed by the successive layering of various waveguide material on a III-V semiconductor substrate. The various layers are relatively thick, such that the waveguide is sized to be physically more compatible with an optical fibre. The various layers are etched as to form a ridge in order to obtain a broadened fundamental mode that is closer is symmetry to the mode of standard optical fibres.

A disadvantage of the optical waveguide according to the prior art is that numerous layers need to be deposited and etched to determine this waveguide, some of which layers are considerably thick, which may result in production difficulties and higher production costs.

It is an object of the invention to provide an improved integrated optical device comprising a waveguide that is obtained by a less complex manufacturing process.

This object is achieved by an integrated optical device characterized in that said at least one optical waveguide is at least substantially defined as a structure of said substrate. The formation of an optical waveguide as an integral part of the substrate no longer requires the deposition of numerous layers. The optical waveguide of the substrate is a localized portion of this substrate having a lower effective refractive index than the surroundings. Preferably, the structure is defined in the substrate, e.g. by etching, by removing the surrounding material. The structure may be a trapezium shaped structure obtained by employing a suitable etchant having etchant characteristics for etching the substrate along particular crystal planes. One example in which such a structure can be fabricated is Indium-Phosphide (InP), in which the anisotropic etching is applied, using crystal surfaces to form the trapezium structure.

In a preferred embodiment of the invention the structure constituting the optical waveguide can be mechanically strenghtened by one or more support structures. Especially the trapezium-shaped structure may be instable and robustness of the structure is enhanced by such a structure. The support structure may be defined as a further structure of the substrate. This is advantageous in that the support structure is obtained in the same process step. The further structure generally is not detrimental to the optical performance of the optical waveguide, since the diffraction of the optical signal near the support structure is limited, for structures smaller than 100 times the wavelength of the light in the structure. A support structure is especially advantageous at or near an edge of the substrate where a facet of the structure is exposed, e.g. for receiving an optical signal from an optical fibre.

In an embodiment of the invention a spot size converter (SSC) is determined by said optical waveguide and a tapered further waveguide. For spot size converters, the fibre-matched waveguide (FMW) that is usually deposited as a number of layers on the substrate, may be replaced by the optical waveguide that is substantially defined by the substrate itself. The further waveguide may be tapered in various fashions, such as lateral tapers, vertical tapers, a combination of both or a three-dimension taper. Such a SSC may be used to separate a fraction of the optical signal that is subsequently fed to one or more further components and/or outputs of said optical device.

It is noted that US 5,787,214 discloses a connection between an integrated optical waveguide and an optical fibre wherein a substrate is etched anisotropically to provide a V-groove structure. However, this structure is used for positioning of the optical fibre and does not constitute an optical waveguide itself.

It is further noted that US 4,334,774 discloses an optical system comprising a substrate with a pyroelectric waveguide defined by depositing a dopant on the surface of the substrate and subsequent heating to diffuse the dopant into the substrate. However, the diffused area defining the optical waveguide is not considered to be a structure according to the invention.

The invention also relates to an integrated optical device comprising a substrate and a spot size converter, wherein the spot size converter comprises an optical waveguide defined by the substrate itself. The optical waveguide can e.g. be obtained by forming an integral structure of the substrate as discussed above or by doping of the substrate. The deposition of numerous layers to define a suitable facet for connecting an optical fibre to the waveguide is no longer required.

The invention will be further illustrated with reference to the attached drawings, which shows preferred embodiments according to the invention.
Fig. 1 shows an InP-substrate with different etching structures for different directions;
Fig. 2 shows a substrate with a trapezium-shaped structure as an optical waveguide;
Fig. 3 shows an optical waveguide defined by a substrate itself and supported by supporting structures;
Fig. 4 shows a spot size converter employing an optical waveguide as shown in Fig. 2;
Fig. 5 shows a opto-electronic device employing the spot size converter as shown in Fig. 4.

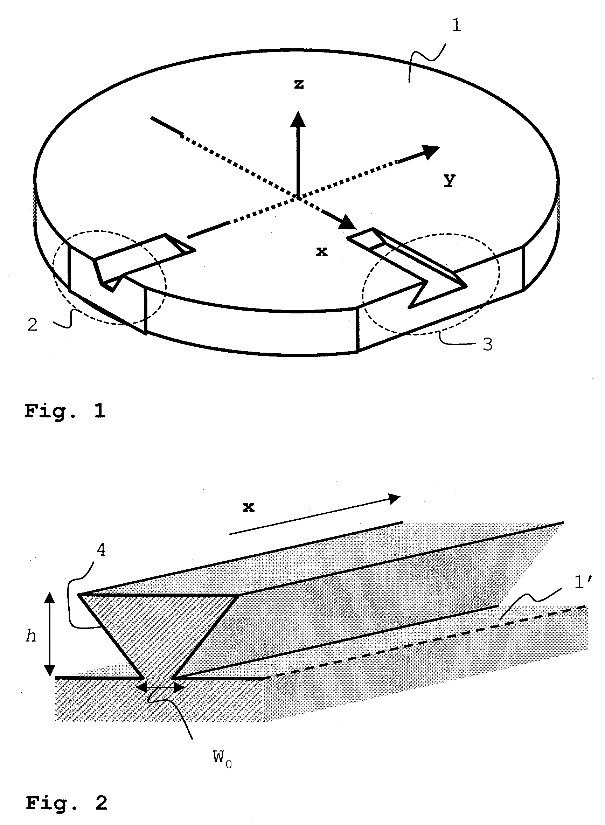

Fig. 1 shows an InP-substrate 1 comprising a V-groove 2 in the y-direction and a "dovetail" profile 3 in the x-direction. The V-groove 2 and dovetail profile 3 have been obtained by etching the substrate 1 with e.g. HBr or a Br₂/CH₃OH etchant.

The dovetail profile 3 can be used for manufacturing an InP structure 4 of the substrate 1 itself that can be used as an optical waveguide, as illustrated in Fig. 2. The structure 4 is obtained by etching substantially parallel dovetail profiles 3 in the substrate 1. The structure 4 is substantially trapezium-shaped, i.e. the structure 4 has a quadrilateral geometry with one pair of sides substantially parallel. The substrate 1 near the structure 4 is etched away exposing a surface 1' of the substrate 1.

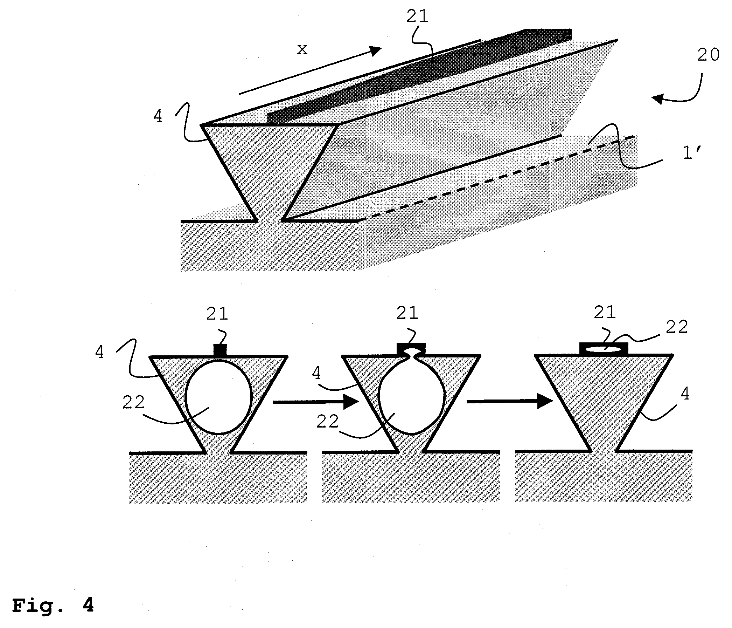

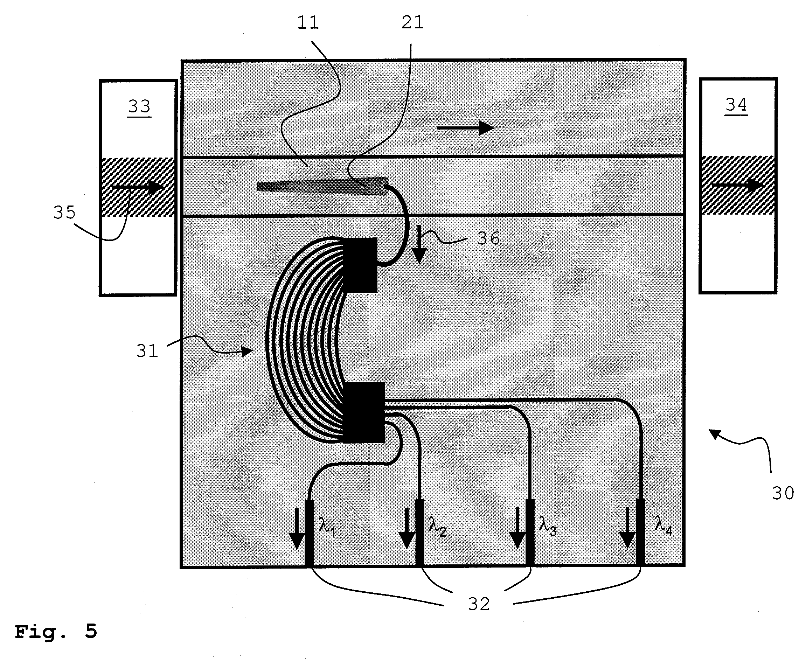

In general an optical signal or mode transmitted in the x-direction will experience significant leakage into the substrate 1. However, if the etch depth or height h increases, the leakage of optical power will decrease for the same angle α. By matching the modal dimensions of the structure 4 to the mode size of the optical fibre (shown in Fig. 5) efficient coupling of the fibre (shown in Fig. 5) and the waveguide formed by the structure 4 can be achieved. The structure 4 is preferably such that it may contain a circular mode (shown in Fig. 4 as 22). In Fig. 2 the sloped side-walls of the structure enable accommodation of such a circular mode. The dimensions of the structure 4 are e.g. 10-30 µm for the top-width of the structure, whereas the etch depth ranges from 10-20 µm. Coupling losses below 0.5dB can be achieved.

The width W₀ of the foot of the structure 4 should preferably be sufficiently small as to avoid significant guiding loss of the optical signal or mode in the x-direction, illustrated in Fig. 2. However, such a small width W₀ might result in a mechanically instable structure 4.

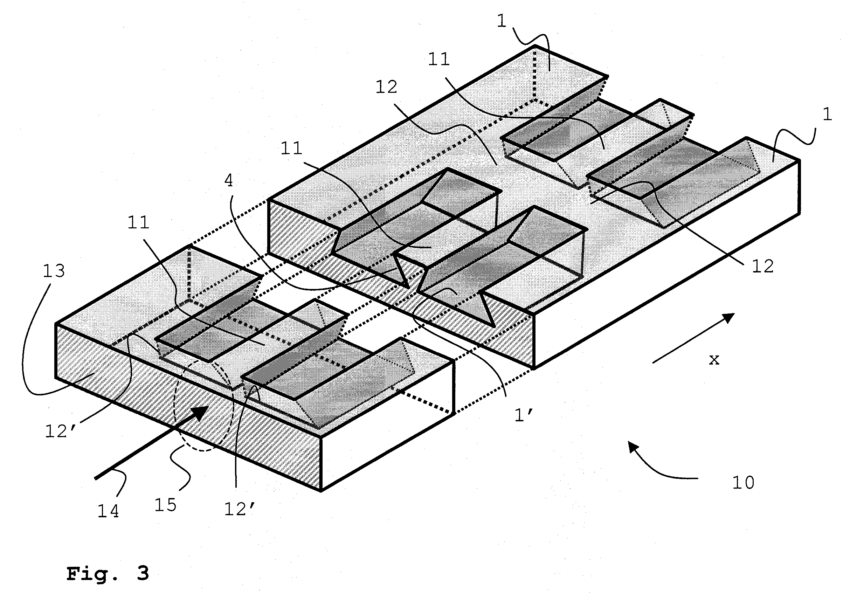

Fig. 3 shows a schematical illustration of an integrated optical device or opto-electronic device 10, wherein the optical waveguide 11 is formed by the structure 4 of the substrate 1. The structure 4 is supported by support structures 12 that are obtained in the same etching step employed for defining the optical waveguide 11. The support structures 12 are here formed as bridges to the non-etched parts of the substrate 1.

It is especially advantageous to provide a supporting structure 12' at or near the edge 13, e.g. at the input section for an optical signal 14 in the x-direction, of the optical device 10. As a result the edge 13 of the chip is or remains rectangular preventing the facet 15 of the structure 4 from being exposed individually to e.g mechanical impact. This is especially advantageous at the end of the manufacturing process wherein a wafer is diced into different optical devices.

Fig. 4 shows a spot-size converter (SSC) 20 comprising the structure 4 that is able to function as a waveguide as described above. Moreover, the SSC 20 comprises a further waveguide 21 on top of the structure 4 that is tapered to achieve mode conversion for the optical signal 22 . In Fig. 4 the further waveguide 21 has a lateral taper, but other taper shapes can be envisaged as well.

As schematically illustrated by the three stages at the bottom of Fig. 4, an optical mode 22 that first is fully present in the structure 4, is subsequently transferred to the tapered waveguide 21 when the mode 22 propagates in the x-direction until it is confined within this tapered waveguide 21. It is noted that leakage of the mode 22 into the substrate is not taken into account in this illustration.

Finally, Fig. 5 shows an example of an application of the SSC 20 shown in Fig. 4. An opto-electric device 30 is provided with a structure 4 (not visible as Fig. 5 shows a top view of the device 30) as described above. The device 30 further comprises an arrayed waveguide grating (AWG) 31 and a set of photodiodes 32. The optical system further shows an input fibre 33 and an output fibre 34.

An optical signal 35 that is input from fibre 33 propagates in the x-direction along the waveguide 11 defined by the structure 4 until a fraction 36 of the signal 35 is transferred to the further tapered waveguide 21 on top of the structure 4. The optical system allows e.g. for a fraction of 5% tapped from the optical signal 35, while the rest of the optical signal is directly output at the fibre 34. The tapped signal or fraction 36 is input to the AWG 32 that demultiplexes the fraction 36 and supplies selected wavelengths λ to the photodiodes 32 for further processing.

The invention is not restricted to the above described embodiments which can be varied in a number of ways within the scope of the claims, e.g. by using a non-trapezium shaped structure 4.

## Claims

1. Integrated optical device (10;30) comprising a substrate (1) and at least one optical waveguide (11) **characterized in that**
said at least one optical waveguide (11) is at least substantially defined as a structure (4) of said substrate (1).

2. Integrated optical device (10) according to claim 1, wherein said structure (4) is an etched structure of said substrate (1).

3. Integrated optical device (10) according to claim 1 or 2, wherein said structure (4) is a substantially trapezium shaped structure.

4. Integrated optical device (10) according to any one of the preceding claims, wherein said structure (4) is stabilized by at least one support structure (12).

5. Integrated optical device (10) according to claim 4, wherein said support structure (12) is a further structure of said substrate (1).

6. Integrated optical device (10) according to claim 4 or 5, wherein said substrate (1) comprises at least one edge (13) exposing a facet (15) of said structure (4) and said support structure (12') is defined at or near said edge (13).

7. Integrated optical device (30) according to any one of the preceding claims, wherein a spot size converter (20) is determined by said optical waveguide (11) and a tapered further waveguide (21).

8. Integrated optical device (30) according to claim 7, wherein said optical waveguide (11) is adapted to receive an optical signal (35) and said further waveguide (21) is adapted to separate a fraction (36) from said optical signal (35) and to transfer said fraction (36) to one or more further components (32) and/or outputs of said optical device (30).

9. Integrated optical device (30) comprising a substrate (1) and a spot size converter (20), wherein said spot size converter (20) comprises an optical waveguide (11) defined by said substrate (1) itself.

10. Integrated optical device (30) according to claim 9, wherein said optical waveguide (11) is adapted to receive an optical signal (35) and a further tapered waveguide (21) of said spot size converter (20) is adapted to separate a fraction (36) from said optical signal (35) and to transfer said fraction (36) to one or more further components (32) and/or outputs of said optical device (30).
